Europäisches Patentamt

European Patent Office

Office européen des brevets

(11) Publication number: **0 434 875 A1**

## EUROPEAN PATENT APPLICATION

(21) Application number: 89313707.5

(22) Date of filing: 29.12.89

(51) Int. Cl.⁵: **G06F 15/21**

(43) Date of publication of application:
**03.07.91 Bulletin 91/27**

(84) Designated Contracting States:
**DE FR GB**

(71) Applicant: **S K C SOFTWARE**
**1 Stokes Place**
**St. Stephens Green Dublin 2(IE)**

(72) Inventor: **Reynolds, David**
**Grosvenor Cottage Victoria Avenue**
**Bray County Wicklow(IE)**

(74) Representative: **Hackett, Sean James et al**
**Marks & Clerk 57-60 Lincoln's Inn Fields**
**London WC2A 3LS(GB)**

(54) A resource control system.

(57) A resource control system is disclosed which is integrated as resource control values relating to fees, time and expenses for relatively short, intermediate and long time periods is stored and may be displayed. The information is updated regularly and a single mainframe computer, which also directs the generation of invoices is used. The problems of over-burdening the memory and processing power of the mainframe computer are avoided by assigning all of the relevant data into staff, contract, manager and classification files, and processing the various files in a serial manner such that work is not duplicated. Further, when creating each file, the mainframe computer uses random access memory and a permanent storage medium in a manner which minimises transmission of data and avoids duplication.

EP 0 434 875 A1

# A RESOURCE CONTROL SYSTEM

The present invention relates to a resource control system of the type in which values for resource parameters such as man-hours, outlays for equipment or supplies are stored on an on-going basis and there is a requirement for collating and processing the received values to generate documents and reports which may be either displayed or printed at regular intervals.

For example, in a resource control system for an organisation where time input of staff for work contracts, fees charged and paid, and expenses incurred is important, such information may be received on an hourly basis without using a large amount of computer internal memory or processing power at any one time. If, however, it is desired to process documents and reports at regular intervals such as at the end of a week, the end of a month, or the end of a year, collation and sorting out the information all at the one time can sometimes require more internal memory and processing capacity than is available. In such situations, the system may break down and information will be lost.

European Patent Specification No. 0052713B1 (I.B.M.) describes a process management system for scheduling work requests. In this system, an attempt is made to reduce processing time required by holding a process to prevent it from executing additional work requests according to a priority queue scheme. In a resource control system of the type described above, such an approach would not be satisfactory as it is essential to collate all of the information together so that a report may be produced. As a result, additional computers are often required for batch processing and accordingly integration of all resource data processing, has not been satisfactorily achieved.

The present invention is directed towards providing an improved resource control system which is arranged to carry out all of the required functions such as reception of data, storage of data, generation and printing of documents, and batch processing of reports at regular time intervals without requiring an excessive amount of internal memory or processing power at any one time.

According to the invention, there is provided a resource control system comprising a mainframe computer connected to a memory device and to a plurality of user interface devices, the control system being for reception and storage of resource data including values of resource parameters relating to work of staff and administration for a contract, sorting of the received data and processing of documents and reports relating to the data received,

characterised in that,

the mainframe computer comprises means for reception and storage in the memory device of values from staff of expenses incurred for contracts, time spent working on contracts and fee invoices to be issued for contracts; of values for cash received in payment of invoices, administration expenses incurred, and indications of staff classifications; and of resource planning values from managers including budgeted time to be spent by staff working on contracts, and of budgeted levels of fees to be invoiced for a pre-determined time period;

the mainframe computer includes a processing circuit comprising:-

means for retrieving from the memory device received information relating to each individual staff member and storing the information in staff files on the memory device;

means for subsequently retrieving from the memory device received information relating to each contract and storing the retrieved information in contract files on the memory device;

means for subsequently retrieving from the memory device received information relating to each manager and storing the retrieved information in manager files on the memory device;

means for subsequently retrieving from the memory device received information relating to staff classifications and storing the information in staff classification files on the memory device;

means for subsequently retrieving information received during a next previous relatively short cycle time period from each of the staff, contract, manager and classification files and storing the retrieved information in a cycle file on the memory device;

means for subsequently merging a plurality of stored cycle files to create a period file on the memory device containing information relating to an intermediate time period;

means for subsequently merging a plurality of period files to create an annual file on the memory device containing information occurring during the previous year;

the mainframe computer includes an output interface circuit for generation of reports including information from the staff, contract, manager and classification files; and

the resource control system further comprises a word processor and the mainframe computer is arranged to direct issuance of fee invoices at the word processor based on contract files stored in the memory device.

In one embodiment, the means for retrieving received information relating to each individual staff member, to each contract, to each manager and to staff classifications comprises:-

means for retrieving the relevant cycle values and transmitting the cycle values for storage in the memory device;

means for setting-up an output cycle file in random access memory of the mainframe computer;

means for subsequently retrieving relevant period values from the memory device and transmitting the period values for storage in the memory device;

means for setting-up a relevant output period file in random access memory of the mainframe computer;

means for subsequently retrieving the relevant annual values and transmitting the annual values for storage in the memory device;

means for setting-up an output annual file in random access memory of the mainframe computer;

means for storing the retrieved cycle values in the cycle output file in random access memory;

means for storing the retrieved period values in the period output file in random access memory;

means for storing the retrieved annual values in the annual output file in random access memory; and

means for merging the output files to create the relevant staff, contract, manager or classification file and storing the file on the memory device.

Ideally, the mainframe computer comprises means for receiving a request from a user interface device for issuance of an invoice for a contract;

means for locating the relevant contract values on the desired cycle, period, or annual file;

means for displaying an indication of work-in-progress for the relevant file;

means for calculating and displaying an estimated fee based on the level of work-in-progress for the contract;

means for receiving a desired fee to be issued;

means for updating the relevant contract file using the fee to be issued; and

means for transmitting the fee amount together with a standard text to the word processor.

The invention will be more clearly understood from the following description of some preferred embodiments thereof, given by way of example only with reference to the accompanying drawings in which:-

Fig. 1 is a block diagram illustrating a resource control system of the invention;

Figs. 2 is a flow diagram illustrating operation of the resource control system;

Fig. 3 is a sample report generated by the resource control system; and

Figs. 4 to 6 are flow diagrams illustrating in more detail operation of the system.

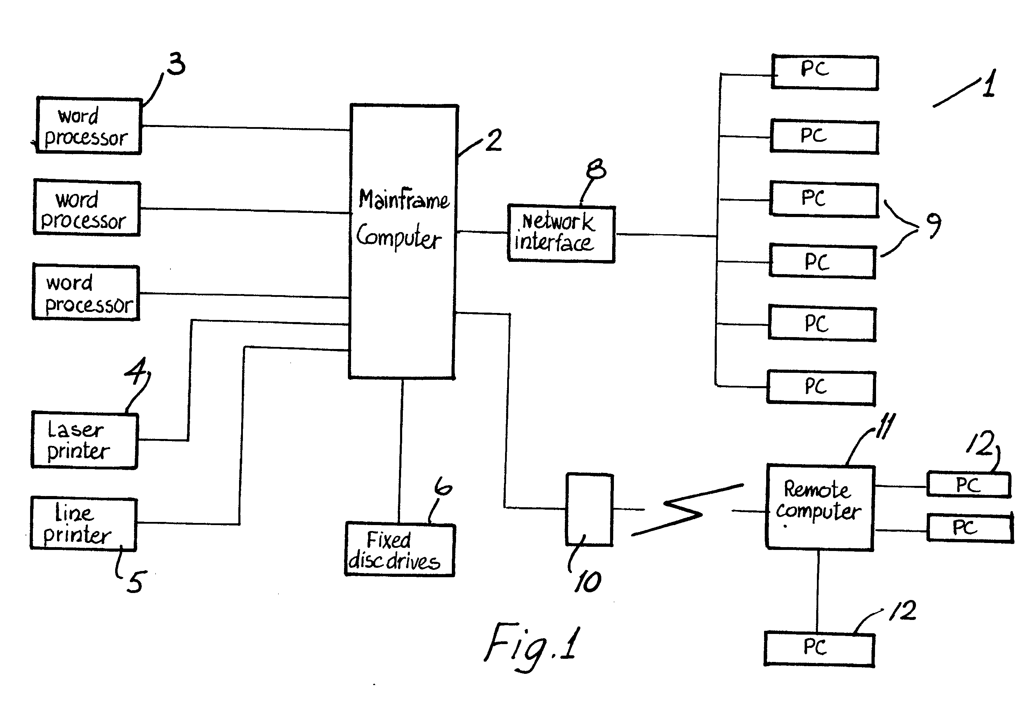

Referring to the drawings, and initially to Fig. 1 there is illustrated a resource control system of the invention, indicated generally by the reference numeral 1. The resource control system 1 comprises a mainframe computer 2 connected by cable to in-house word processors 3, to a laser printer 4, to a line printer 5, and to a permanent storage medium, namely fixed disc drives 6. The mainframe computer 2 is also connected by a network interface circuit 8 to a plurality of personal computers 9. The mainframe computer 2 is also arranged to be connected by modems 10 and switched lines to a remote computer 11 connected to personal computers 12 and other user interface devices, not shown.

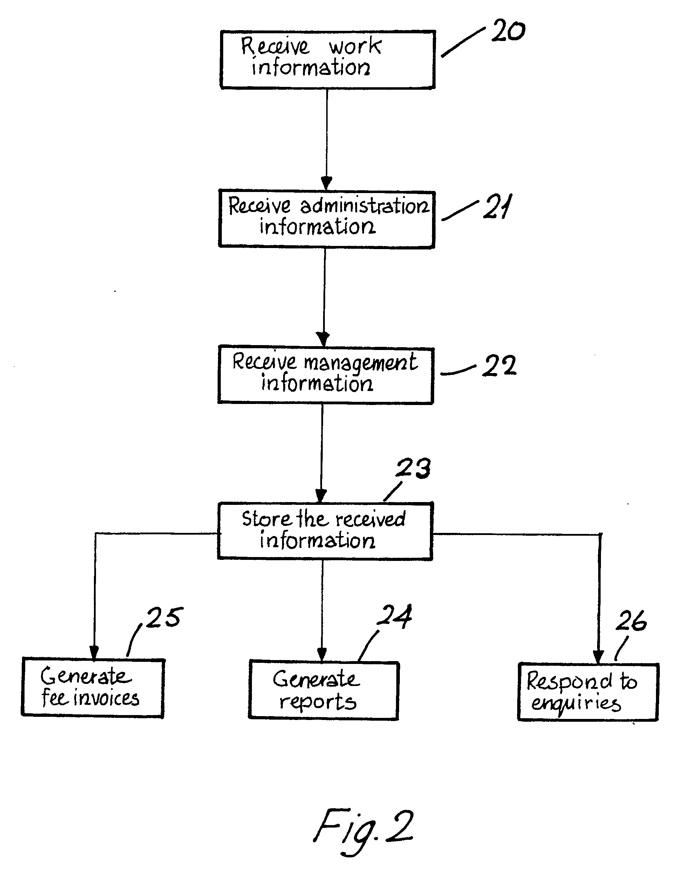

Referring now to Fig. 2, operation of the resource control system 1 is illustrated in an outline format. The resource control system 1 receives values for resource parameters on an on-going basis, stores the received values on a permanent storage medium, subsequently retrieves the values for collection and processing for generation of documents and reports at regular intervals. In this embodiment, the system 1 is used for generation of reports indicating time utilization, and fees charged and paid for work spent by staff on contracts in a professional service organisation. Other functions include generation of fee invoices, word processing and handling of resource management enquiries generally.

In step 20, the personal computers 9 receive values from staff of expenses incurred for contracts, time spent working on contracts and fee invoices to be issued for contracts. This information is received on an on-going basis and may be received at regular intervals during a day or at the end of a day as taken from a time sheet. In step 21, the personal computers 9 receive values from administration staff of cash received in payment of invoices, administration expenses incurred (including costs of equipment used) and staff classifications. This information is also received on a daily basis with the exception of the staff classifications which may be updated at regular, say monthly periods. Staff classifications generally depend on length of service, experience and position of employment. In step 22, the personal computers 9 receive values of budgeted time to be spent by staff working on the contracts and of budgeted levels of fees to be charged for a pre-determined time period. This information is not necessarily received on a daily basis and may be input at regular, say weekly intervals. The received information is transmitted via the network 8 to the mainframe computer 2 which directs storage of the information on the fixed disc drives 6 in step 23.

The mainframe computer 2 may direct the printing of fee invoices at a word processor 3 according to instructions received at a personal computer 9 in step 25. In step 26 the mainframe computer may respond to enquiries at the personal computers 9.

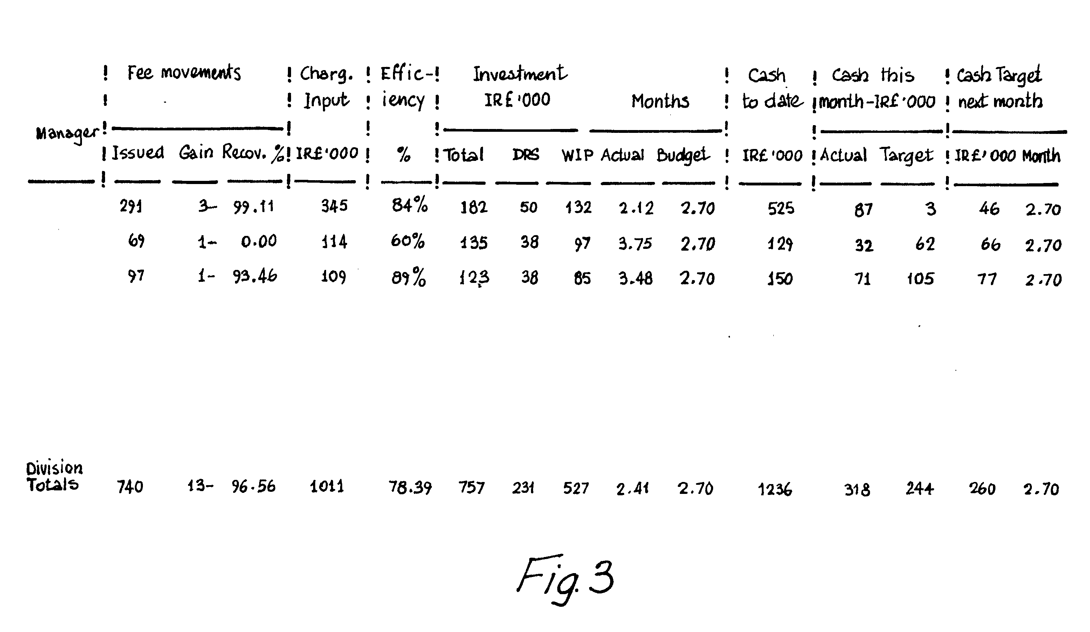

In step 24, the stored information is retrieved by a processing circuit of the mainframe computer 2 for determination of data for reports generated by an output circuit at regular intervals. These reports are transmitted to the laser and line printers 4 and 5 and also to the personal computers 9 for display on screens and printing on associated printers. An example of a report which is generated by the system is illustrated in Fig. 3, in which it will be in seen that the report includes information on the following:-

1. The total value of work-in-progress (WIP) and expenses for a manager supervising a number of staff.

2. The value of a manager's debtors (DRS).

3. Fees charged and cash received for a time period.

4. The amount of time charged to clients during the month as compared with chargeable time.

5. A calculation of the number of months ageing represented by the combination of work-in-progress, expenses and debtors compared to a pre-determined target.

6. The total cash collections requirement for the manager for the following month based on a pre-determined target, ageing at the end of the next month.

As this report summarises the position of particular managers, the report will be suitable for senior management and gives a "helicopter view" of work in the organisation. The report also enables decisions regarding cash budgeting and monitoring of work-in-progress to be made. Generally, on an on-going basis patterns will emerge and the system 1 will generate reports indicating certain patterns over longer periods such as a year. In this way, if there are seasonal factors involved relevant adjustments may be made to make the information more relevant.

It will be appreciated that generation of such a report involves the retrieval, sorting, and collating of a very large amount of data and the use of a large amount of processing power for determination of data to be included in reports generated by the output interface circuit. If the mainframe computer 2 is directed to handle too much information at any one time, some if not all of the information may be lost on breakdown. Clearly, such a situation is entirely unsatisfactory.

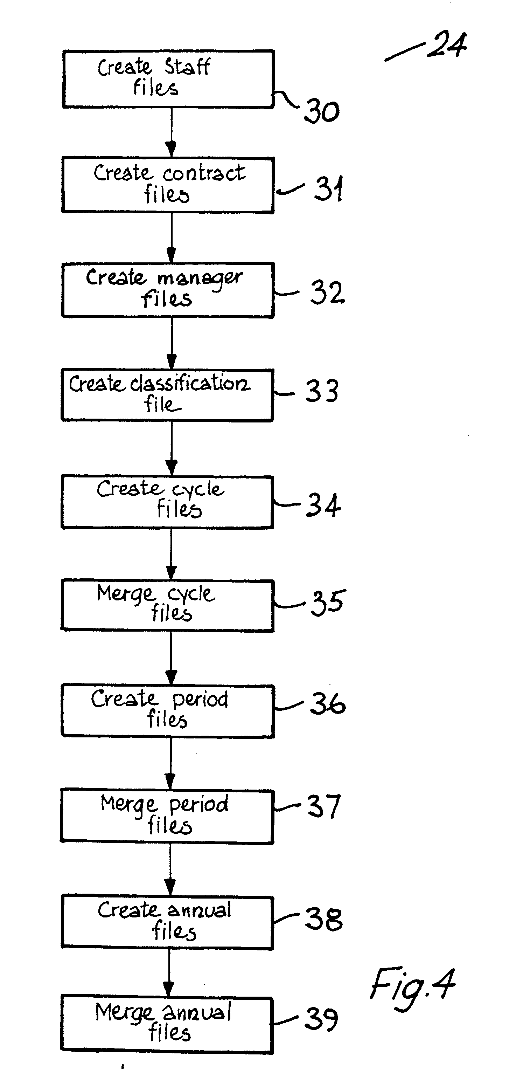

Referring now to Fig. 4, operation of the mainframe computer 2 for generation of a report using the received information is illustrated. Briefly, there are a number of operations which are carried out in series. In step 30, the mainframe computer 2 retrieves information relating to each employee or staff member working on a contract, in turn, to create staff files. Subsequently, the mainframe computer 2 retrieves information relating to each particular contract to create contract files in step 31. In step 32, information relating to contract work within the responsibility of each individual manager is retrieved and stored to create manager files. Much of the information displayed in the report of Fig. 3 is derived from manager files. In step 33, information relating to staff classifications are retrieved and stored to create a staff classification file. All of the staff contract, manager and classification files are immediately stored on the fixed disc drives 6 when created.

Each of the above operations is performed by the mainframe computer 2 in a serial manner, one after the other. The mainframe computer 2 is then arranged to retrieve information from the permanent storage medium relating to a next previous time cycle, in this case the previous calendar week, from each of the staff, contract, manager and classification files to create four associated cycle files in step 34. The four cycle files are merged in step 35. Subsequently, the mainframe computer 2 retrieves information from the four staff, contract, manager and classification files to create associated period files which relate to a certain intermediate time period, in this case a month. In step 37, the associated period files are merged. In step 38, information relating to a relatively long time period, in this case a year, is retrieved from the four above-mentioned files to create associated annual files, which are subsequently merged in step 39.

It has been found that by assigning the received information to the four categories of staff, contract, manager and classification files, processing of the received information is relatively simple and further processing will require little memory space and processing power. Further, by creating each file in turn in a serial manner there is little burden on the mainframe computer 2 at any one time in retrieval and sorting of the data.

Most processing power is required in steps 30 to 33 when the staff, contract, manager and classification files are being created. The reason for this is that account must be taken of previous cycle, period and annual files and a large amount of sorting is required of the received information.

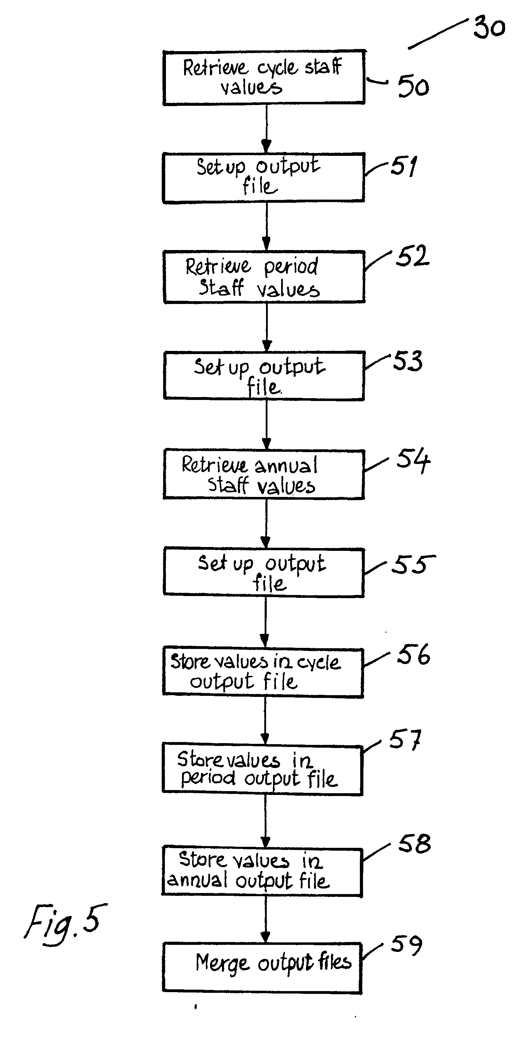

Referring now to Fig. 5, operation of the mainframe computer 2 for the step 30 is illustrated. Similar steps are involved in carrying our steps 31, 32 and 33 for the categories of contract, manager and staff files. Initially, in step 50 the staff cycle values are retrieved for a particular calendar week, are transmitted to the fixed disc drives 6 and subsequently an output cycle file is set-up in random access memory step 51. In step 52 staff period values are retrieved and stored in the fixed disc drives 6 and subsequently in step 53 an output period file is set-up in random access memory. In step 54 relevant annual values are retrieved and stored in the fixed disc drives 6 and subsequently in step 55 an output contract file is set-up in random access memory. In step 56 the retrieved cycle values are read from the discs and transmitted to the output cycle file which has been set-up. In a similar manner the retrieved period values are stored in the period output file in step 57 and in step 58 the retrieved annual file values are stored in the annual output file. All of the output files, which are in random access memory, are then merged in step 59 to form a new staff file which is transmitted for storage in the fixed disc drives 6.

The manner of carrying out steps 30, 31, 32 and 33 has been found to be very reliable as each category is sub-divided into cycle, period and annual files which are independent but which are each used when the files are being created. For example, because cycle information retrieved is stored in before being stored in the cycle file, it is used to help retrieve information for the period file and similarly the period files are used to help create the annual files. By doing this, data transmission between the mainframe computers 2 and the fixed disc drives 6 is minimised and duplication of processing is avoided. The random access memory is used only on merging of data in setting-up of the files.

By operating in this manner the mainframe computer is capable of dealing with the large amount of data processing required at weekly, monthly and annual intervals and there is no need for additional mainframe computers to deal with all of the functions of an integrated resource control system. Thus the need for having fee calculations and time calculations carried out separately on separate computers is avoided and the information may be readily easily integrated to provide useful reports such as that illustrated in Fig. 3. Further, because relatively little internal memory and processing power is required at any one time, both in-house and remote users may access the system at any time to make enquiries.

Another important aspect of the invention is the total integration not only of information which is necessary for generation of reports on resource control but also in generation of invoices and word processing generally which is an integral part of the system. Again, because of the manner in which the mainframe computer 2 has been arranged to process the received data the mainframe computer 2 may at any time handle the generation of fee invoices and covering letters and any other associated correspondence.

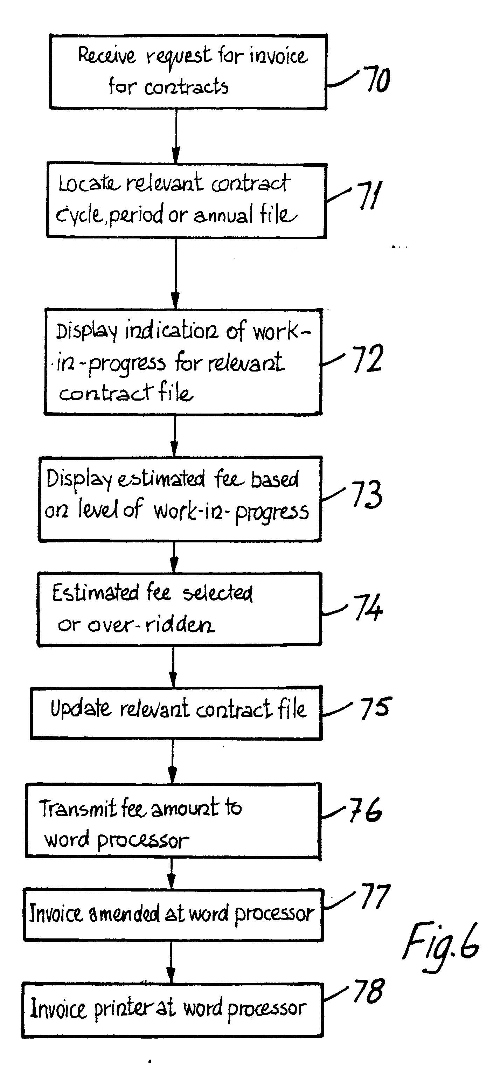

Referring now to Fig. 6, the manner in which the mainframe computer 2 generates a fee invoice is illustrated in detail. A request is made on a personal computer 9 that a fee is to be issued for a particular contract in step 70. The mainframe computer 2 then reads the relevant contract file in step 71 and in step 72 it displays on the personal computer 2 an indication of the work-in-progress for the relevant contract file. The mainframe computer 2 will then in step 73 direct the displaying of an estimated fee for the contract based on the level of work-in-progress and the staff member at the personal computer 2 may either over-ride the estimated fee and input a desired fee or he or she may use the estimated fee. When the mainframe computer 2 receives an indication of the desired fee, it updates the relevant contract file in step 75 and then transmits the fee amount together with a standard text to the word processor in step 76. At the word processor 3, the invoice text may be amended as desired and it is then printed together with a covering letter in step 78.

It will thus be appreciated that the resource control system of the invention provides information summarized into weekly, monthly or annual time spans. In addition to this, the resource control system of the invention provides for the issuing of fee invoices with the automatic updating of the relevant files and for handling of user enquiries. Because the system is completely integrated there is no need for duplication, even at a remote user location. This complete integration has been achieved primarily because of the manner in which the mainframe computer 2 has been arranged to generate reports and process information generally at busy times such as at a months end. By providing completely integrated information in this manner many of the problems involved in managing a relatively large project or organisation caused by breakdown in communications are avoided and problems may be anticipated before they grow to being difficult to solve.

The invention is not limited to the embodiments hereinbefore described but may be varied in construction and detail.

## Claims

1. A resource control system (1) comprising a mainframe computer (2) connected to a memory device (6) and to a plurality of user interface devices (9), the control system (1) being for reception and storage of resource data including values of resource parameters relating to work of staff and administration for a contract, sorting of the received data and processing of documents and reports relating to the data received,
characterised in that,
the mainframe computer (2) comprises means for reception and storage in the memory device (6) of values (20) from staff of expenses incurred for contracts, time spent working on contracts and fee invoices to be issued for contracts; of values (21) for cash received in payment of invoices, administration expenses incurred, and indications of staff classifications; and of resource planning values (22) from managers including budgeted time to be spent by staff working on contracts, and of budgeted levels of fees to be invoiced for a predetermined time period;

the mainframe computer (2) includes a processing circuit comprising:-

means (30) for retrieving from the memory device received information relating to each individual staff member and storing the information in staff files on the memory device;

means (31) for subsequently retrieving from the memory device received information relating to each contract and storing the retrieved information in contract files on the memory device;

means (32) for subsequently retrieving from the memory device received information relating to each manager and storing the retrieved information in manager files on the memory device;

means (33) for subsequently retrieving from the memory device received information relating to staff classifications and storing the information in staff classification files on the memory device;

means (34) for subsequently retrieving information received during a next previous relatively short cycle time period from each of the staff, contract, manager and classification files and storing the retrieved information in a cycle file on the memory device;

means (35,36) for subsequently merging a plurality of stored cycle files to create a period file on the memory device containing information relating to an intermediate time period;

means (37,38) for subsequently merging a plurality of period files to create an annual file on the memory device containing information occurring during the previous year;

the mainframe computer includes an output interface circuit for generation of reports (24) including information from the staff, contract, manager and classification files; and

the resource control system further comprises a word processor and the mainframe computer is arranged to direct issuance of fee invoices (25) at the word processor based on contract files stored in the memory device.

2. A resource control system (1) as claimed in claim 1, wherein the means for retrieving received information relating to each individual staff member, to each contract, to each manager and to staff classifications comprises:-

means for retrieving the relevant cycle values (50) and transmitting the cycle values for storage in the memory device;

means for setting-up an output cycle file (51) in random access memory of the mainframe computer;

means for subsequently retrieving relevant period values (52) from the memory device and transmitting the period values for storage in the memory device;

means for setting-up a relevant output period file (53) in random access memory of the mainframe computer;

means for subsequently retrieving the relevant annual values (54) and transmitting the annual values for storage in the memory device;

means for setting-up an output annual file (55) in random access memory of the mainframe computer;

means for storing the retrieved cycle values in the cycle output file (56) in random access memory;

means for storing the retrieved period values in the period output file (57) in random access memory;

means for storing (58) the retrieved annual values in the annual output file in random access memory; and

means for merging the output files (59) to create the relevant staff, contract, manager or classification file and storing the file on the memory device.

3. A resource control system (1) as claimed in claims 1 or 2, wherein the mainframe computer (2) comprises:-

means for receiving a request (70) from a user interface device for issuance of an invoice for a contract;

means for locating the relevant contract values (71) on the desired cycle, period, or annual file;

means for displaying an indication of work-in-progress (72) for the relevant file;

means for calculating and displaying an estimated fee (73) based on the level of work-in-progress for the contract;

means for receiving a desired fee to be issued (74);

means for updating the relevant contract file (75) using the fee to be issued; and

means for transmitting the fee amount (76) together with a standard text to the word processor.

Fig.1

EP 0 434 875 A1

Fig.2

EP 0 434 875 A1

| Manager | Fee movements | | | | Charg. Input | Effic-iency | Investment IR£'000 | | | Months | | Cash to date | Cash this month-IR£'000 | | Cash Target next month | |
|---|---|---|---|---|---|---|---|---|---|---|---|---|---|---|---|---|
| | Issued | Gain | Recov. % | IR£'000 | IR£'000 | % | Total | DRS | WIP | Actual | Budget | IR£'000 | Actual | Target | IR£'000 | Month |
| | 291 | 3- | 99.11 | 345 | | 84% | 182 | 50 | 132 | 2.12 | 2.70 | 525 | 87 | 3 | 46 | 2.70 |
| | 69 | 1- | 0.00 | 114 | | 60% | 135 | 38 | 97 | 3.75 | 2.70 | 129 | 32 | 62 | 66 | 2.70 |
| | 97 | 1- | 93.46 | 109 | | 89% | 123 | 38 | 85 | 3.48 | 2.70 | 150 | 71 | 105 | 77 | 2.70 |
| Division Totals | 740 | 13- | 96.56 | 1011 | | 78.39 | 757 | 231 | 527 | 2.41 | 2.70 | 1236 | 318 | 244 | 260 | 2.70 |

*Fig. 3*

_24_

```
┌─────────────────────┐
│   Create Staff      │
│      files          │── 30
└─────────────────────┘
          │
          ▼
┌─────────────────────┐
│  Create contract    │── 31
│      files          │
└─────────────────────┘
          │
          ▼
┌─────────────────────┐
│  Create manager     │── 32
│      files          │
└─────────────────────┘
          │
          ▼
┌─────────────────────┐
│ Create classification│── 33
│      file           │
└─────────────────────┘
          │
          ▼
┌─────────────────────┐
│   Create cycle      │── 34
│      files          │
└─────────────────────┘
          │
          ▼
┌─────────────────────┐
│   Merge cycle       │── 35
│      files          │
└─────────────────────┘
          │
          ▼
┌─────────────────────┐
│   Create period     │── 36
│      files          │
└─────────────────────┘
          │
          ▼
┌─────────────────────┐
│   Merge period      │── 37
│      files          │
└─────────────────────┘
          │
          ▼
┌─────────────────────┐
│   Create annual     │── 38
│      files          │
└─────────────────────┘
          │
          ▼
┌─────────────────────┐
│   Merge annual      │── 39
│      files          │
└─────────────────────┘
```

Fig.4

10

Fig.5

Receive request for invoice for contracts — 70

Locate relevant contract cycle, period or annual file — 71

Display indication of work-in-progress for relevant contract file — 72

Display estimated fee based on level of work-in-progress — 73

Estimated fee selected or over-ridden — 74

Update relevant contract file — 75

Transmit fee amount to word processor — 76

Invoice amended at word processor — 77

Fig.6

Invoice printer at word processor — 78

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 251 858 (BOEING) <br> * Column 2, line 46 - column 3, line 68; column 4, line 54 - column 6, line 66; column 12, line 24 - column 14, line 10; figures 1,2,8 * | 1 | G 06 F 15/21 |
| A | US-A-4 819 162 (TIME MANAGEMENT CORP.) <br> * Column 1, line 40 - column 8, line 38; column 16, line 63 - column 17, line 14; column 19, line 44 - column 20, line 33; figures 1,2,11,30-35,52-54 * | 1 | |
| A | US-A-4 847 791 (MARTIN) <br> * Column 2, line 18 - column 11, line 5 * | 1 | |
| A | US-A-3 938 106 (BECKER) <br> * Column 1, line 36 - column 2, line 23; column 2, line 54 - column 3, line 30, figure 1 * | 1 | TECHNICAL FIELDS SEARCHED (Int. Cl.5) <br><br> G 06 F 15/21 |

The present search report has been drawn up for all claims

| Place of search | Date of completion of the search | Examiner |
|---|---|---|
| THE HAGUE | 19-07-1990 | CHUGG D.J. |

EPO FORM 1503 03.82 (P0401)